# EUROPEAN PATENT SPECIFICATION

(11) **EP 1 315 333 B1**
(45) Date of publication and mention of the grant of the patent: **09.03.2005**
(21) Application number: 01610121.4
(22) Date of filing: 22.11.2001
(51) Int. Cl.: H04L 12/28

(54) **A method for handing over a terminal**
Verfahren zum Weiterreichen eines Endgerätes
Procédé de transfert d'un terminal

(43) Date of publication of application: 28.05.2003
(73) Proprietor: Telefonaktiebolaget LM Ericsson (publ), 164 83 Stockholm (SE)
(72) Inventor: Kitchen, Martin Henry, 9270 Klarup (DK)
(74) Representative: Wittrup, Flemming

(56) References cited:
- EP-A- 1 081 974
- WO-A-01/20940
- HAARTSEN J: "BLUETOOTH - THE UNIVERSAL RADIO INTERFACE FOR AD HOC, WIRELESS CONNECTIVITY" ON - ERICSSON REVIEW, ERICSSON. STOCKHOLM, SE, no. 3, 1998, pages 110-117, XP000783249 ISSN: 0014-0171

## Description

The invention relates to a method for handing over a terminal preferably an access network user (ANU) from a network access point (NAP) to another NAP, said NAP's being part of an access network (AN), and wherein a number of NAP's is initiated to page said terminal to be handed over with a view to continuing a data communication.

The invention is particularly intended for short range radio communication, where e.g. a plurality of network access points may be arranged in a building so that access network users, which may e.g. be mobile telephones, are in radio communication contact with one network access point at a time, and this should preferably be the access point from where the most effective and faultless data communication with the mobile telephone may be established. When the user moves about in the building, it is necessary that the radio contact switches between a plurality of access points, and this process is called handing over in the art.

Another special term within this technical field is paging, which means that a network access point communicates with an access network user in accordance with a predetermined protocol or standard for signal exchange. Typically, NAP transmits a PAGE signal, while ANU scans for the PAGE signals. The invention is useful in connection with any communications standard, a preferred example in connection with the invention being the Bluetooth communications standard.

The paging process itself takes some time, and the data communication typically going on between a network access point and a plurality of other access network users will be interrupted, while the network access point pages a new access network user. Another problem is that the frequencies used for said communication are close to each other, thereby involving a risk of interference and thus errors.

Said problems appear with the Prior art known from WO 01/20940 and EP 1081974. According to this known prior art the position of the terminal is thoroughly checked in order to pick the correct base station to take over the communication. The data communication needed for this tasks increases the risk of interference and errors.

The object of the invention is to reduce the density of signals in connection with an access network to page the access network users so as to achieve fewer drop-outs of data communications.

This is achieved according to the invention in that only a subgroup of network access points is initiated to page the terminal, while other network access points are excluded from paging the terminal. This reduces the density of signals, and thereby interference and signal drop-out are reduced.

It will be appreciated that the fewer network access points contained in said subgroup, the more the density of signals due to paging can be reduced. The invention is based on the finding that a considerable reduction in the density of signals may be achieved by a further communication exclusively between said terminal and the current network access point which is in contact with the terminal immediately before the data communication is handed over to another network access point.

According to the invention said further communication only comprises a rough determination, which, in a preferred embodiment, can typically exclude half of the NAP's from paging the terminal. The determination typically comprises determination of the position of the terminal relative to the current network access point which has exchanged data with the terminal immediately before the handing-over process of the data communication is initiated. The rough determination may also comprise other parameters, such as a determination of the direction of movement of the terminal relative to the current network access point.

In practice, it will frequently be so that the terminal is either present at a location where the rough determination relative to the current network access point is relatively reliable, or at a location where this rough determination is relatively unreliable. In a preferred embodiment, the subgroup is defined as the network access points which are positioned within a relatively unreliable range for the rough determination. In another preferred embodiment, the subgroup may be defined as either the one or the other set of network access points where the rough determination is relatively reliable, but in any event combined with the network access points where the location determination is relatively unreliable.

The further communication may comprise measurement of signal phase difference. The identification of a subgroup may also be determined on the basis of a specific antenna radiation pattern. In an embodiment, several, e.g. the two last-mentioned measuring methods may be combined to achieve a final subgroup, which is defined on the basis of the determination and two or more subgroups according to the above-mentioned principles.

An overall server may be provided with information about where the network access points are positioned relative to each other, and this information will typically be comprised in a table in an AN server. The server may be dynamically updated.

In big LAN systems with many NAP's a group of NAP's in the vicinity of the current NAP is first defined in a preferred embodiment. Thereafter the one or more subgroups are defined as explained above in relation to the current NAP. Thereby it is possible, when using very limited communication for defining said subgroups, to reduce the density of signals substantially, especially in big LAN's, thereby reducing the risk of interference and drop-outs of the data communication.

The invention will be explained more fully by the following description of some embodiments with reference to the drawing, in which
fig. 1 schematically illustrates a field of use of the invention,
figs. 2 and 3 show a first example and a second example, respectively, of the determination of the position of the ANU relative to the NAP's,
figs. 4 and 5 show examples of how a subgroup is identified on the basis of the determination of the ANU relative to the NAP's, while
fig. 6 shows a further embodiment of the invention.

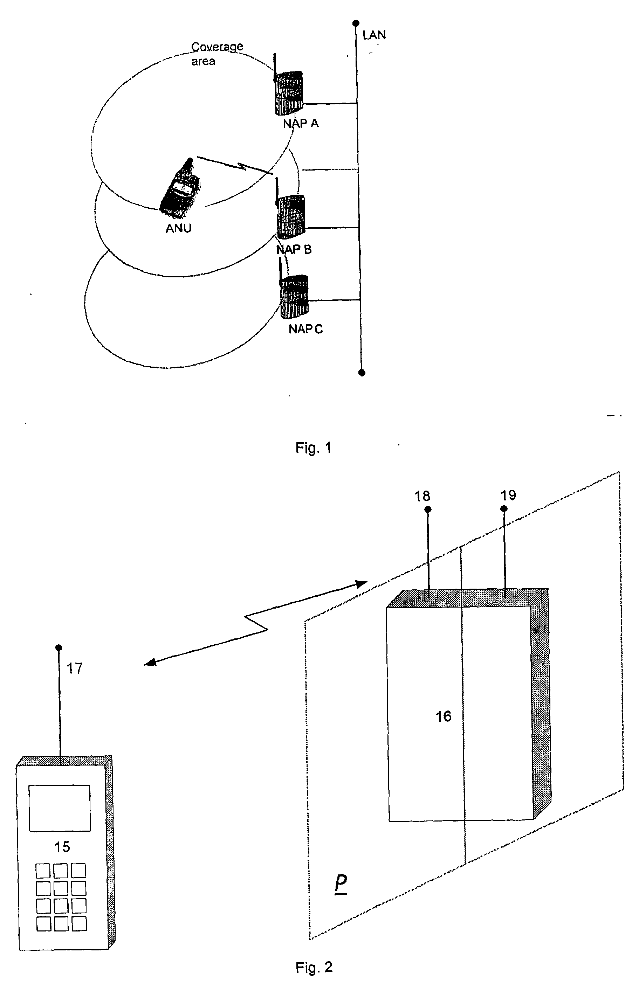

Fig. 1 shows an example of the use of the invention where the access network user (ANU) is shown by a mobile telephone which may be in radio contact for the communication of data with one of a number of network access points NAPA, NAPB or NAPC, which are connected to a local area network (LAN). In a preferred embodiment, radio communication takes place in accordance with the Bluetooth communications standard which defines how an NAP is to page a ANU.

The entire process is initiated in that an existing data connection between ANU and NAPB becomes too poor, i.e. so poor that it is very likely that a better connection may be achieved between ANU and one of the other NAP's. This evaluation may be based on a signal strength measurement or a measurement of rates of bit error or optionally a measurement of how many data packages are lost in the communication. It is stressed that the measuring method or other indications of the link quality initiating the handover procedure are not within the scope of the invention. The invention concerns optimizing the actual paging process when it is observed that the connection between a ANU and e.g. NAPB is too poor.

In the prior art, both NAPA and NAPC as well as other NAP's connected to LAN will successively try to make contact with ANU. While NAPA pages ANU, the data communication going on between NAPA and other ANU's will be interrupted temporarily, which involves a certain risk that the communications connection to one or more of the other ANU's will be lost. Furthermore, there is a great risk that the signals interfere with other signals so that the data communication between the other NAP's and respective ANU's may also be interrupted. According to the invention, it is ensured that NAPC does not page ANU at all, thereby substantially reducing the density of signals and the risk of interference.

Fig. 2 schematically shows how it may be detected whether an ANU 15 is present at one or the other side of the plane P, shown in dotted line, through a NAP 16. ANU 15 has an antenna 17 which communicates with two antennas 18 and 19 on NAP 16, and based on a phase difference measurement it is possible to determine the position of ANU 15 relative to NAP 16. It can also be determined by means of Doppler effect whether ANU 15 moves toward or away from NAP 16, which may be used as a supplement for the definition of a subgroup.

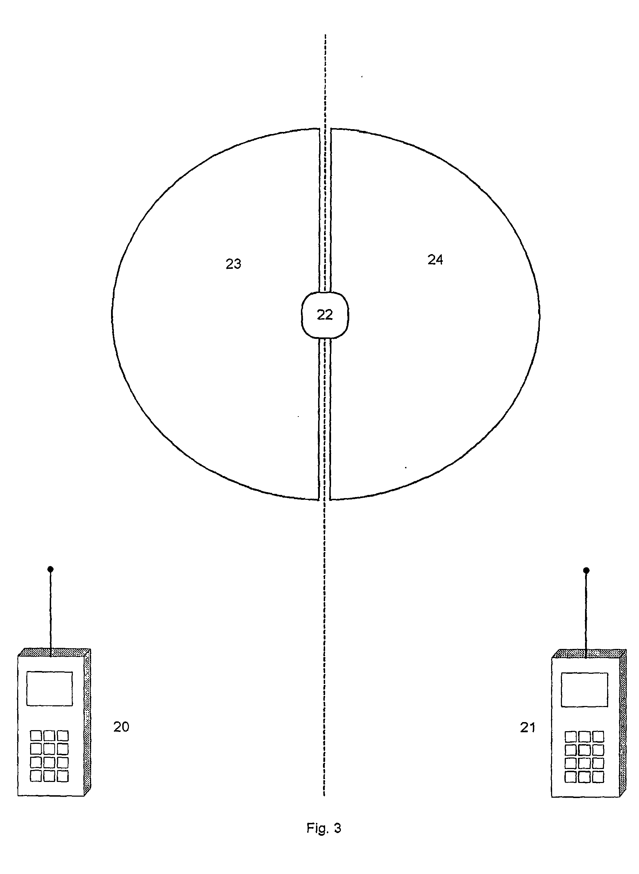

Fig. 3 schematically illustrates a NAP 22, which is equipped with at least two directional antennas e.g. having the radiation diagrams which are shown at 23 and 24. It may be determined in this manner whether PANU 20 and 21 is present on one or the other side of the dashed line shown in fig. 3.

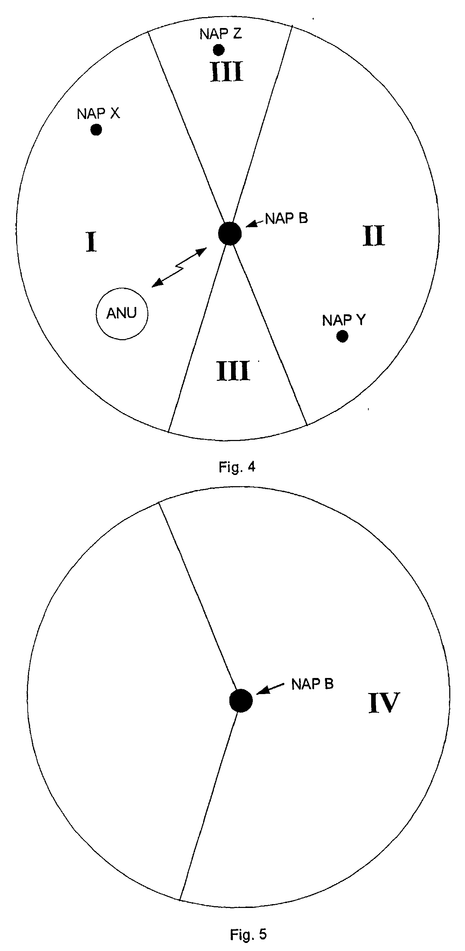

Fig. 4 shows an example of how the measurements, which may be performed as described in connection with fig. 2 or fig. 3, may be used for defining a subgroup of network access points. Fig. 4 shows an ANU which communicates with NAPB, it having been decided in the network whether this data communication is to be handed over to another NAP. On the basis of NAPB, the ranges I, II and the ranges III may be defined. It is defined in a table that all NAPX's are in the range I, that all NAPY's are in the range II, and that all NAPZ's are in the ranges III. In the example shown in fig. 4, a measurement in accordance with the principles of fig. 2 or fig. 3 will show that ANU is in the range I. According to the invention all NAPX's will only page ANU, while all NAPY's and NAPZ's are excluded from paging ANU.

If, however, instead, ANU is close to the plane P in fig. 2 or the dashed line in fig. 3, the determination will be relatively unreliable, and if this is the case, two other subgroups III may be defined. The unreliability of the measurement may e.g. be decided on the basis of the degree of consistency between a few repeated measurements. It will be appreciated that on average this method can more than halve the number of NAP's that page ANU.

If it is not desired to evaluate the relative unreliability of the measurements, then, as shown in fig. 5, the range IV may be selected solely on the basis of a single measurement, which e.g. determines range II, or which may be unreliable. Even with this simple method a considerable reduction in the density of signals is achieved, since NAPX from fig. 4 is excluded from paging ANU.

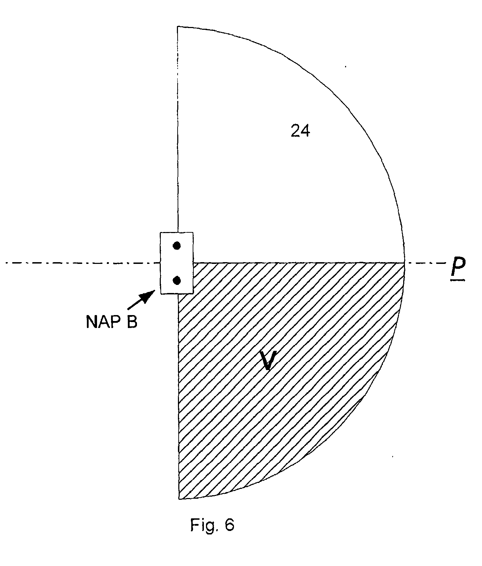

Fig. 6 schematically shows another embodiment in which the principles described in connection with figs. 2 and 3 are combined. An antenna radiation range is shown at 24, corresponding to 24 in fig. 3 for an NAPB, which also has two antennas and an associated plane P like the one explained in connection with fig. 2. In a first measurement it may e.g. be decided that ANU is present in the radiation range 24, and in a second measurement it may be decided that ANU is simultaneously present below P in fig. 6, so that the range V may be defined as a final subgroup. The number of NAP's paging ANU may hereby be reduced to about ¼, and it will be appreciated that the determination of the final subgroup may be supplemented with the principles which have been described in connection with fig. 4 or fig. 5.

In a preferred embodiment which is especially expedient in big LAN's comprising a large number of NAP's, a group of neighbouring NAP's in the vicinity of the current NAP, i.e. the NAP which is in contact with the terminal immediately before initiation of handing over of the data communication to another NAP, is first defined. The identification, number and position of the NAP's in said group are stored in a table, as is the identification of one or more subgroups according to the invention, relative to the current NAP. This can be done according to the principles explained in relation to figs. 4-6, and in a preferred embodiment a subgroup is positioned exclusively on one side or on the other side of the current NAP. Having measured on which side of the current NAP ANU is present, it can be defined which NAP's are going to page the ANU and which NAP's are not.

## Claims

1. A method for handing over a terminal preferably an access network user (ANU) from a network access point (NAP) to another NAP, said NAP's being part of an access network, and wherein a number of NAP's is initiated to page said terminal to be handed over with a view to continuing a data communication, **characterized in tha**t a subgroup of said NAP's is identified, and that NAP's not belonging to said subgroup are excluded from paging said terminal, wherein said identification is based on further communication exclusively between said terminal and the current network access point which is in contact with the terminal immediately before initiation of handing over of the data communication to another network access point, said further communication between the terminal and the current network access point comprises a rough determination of the position of the terminal relative to the current network access point.

2. A method according to claim 1, **characterized in that** said further communication between the terminal and the current network access point comprises a rough determination of the direction of movement of the terminal relative to the current network access point.

3. A method according to claim 1 or 2, **characterized in that** said subgroup also comprises network access points which are positioned in a range in which the rough determination is vitiated by unreliability.

4. A method according to claims 1-3, **characterized in that** said subgroup exclusively comprises network access points which are positioned in a range in which the rough determination is vitiated by relatively great unreliability.

5. A method according to claims 1-2, **characterized in that** said further communication comprises measurement of signal phase difference, measured at the current network access point.

6. A method according to claims 1-2, **characterized in that** said identification is determined on the basis of a specific antenna radiation pattern of the current network access point.

7. A method according to claim 5 or 6, **characterized in that** two antennas are used at the current access point, each antenna radiating a 180° angle, and that a subgroup is identified to comprise such network access points as are all positioned either at one or the other side of the boundary line between the two angular ranges.

8. A method according to claim 7, **characterized in that** said subgroup is identified to comprise such network access points as are all positioned in angular ranges which separate said two angular ranges when said further communication is vitiated by unreliability above a predetermined level.

9. A method according to claim 5 or 6, **characterized in that** a final subgroup is defined on the basis of the determination of two or more subgroups.

10. A method according to claims 1-9, **characterized in that** each NAP has a number of associated neighbouring NAP's, and that the neighbouring NAP's are defined in a table in an AN server.

11. A method according to claim 10, **characterized in that** the table contains information about the spatial positions of the NAP's.

12. A method according to claim 11, **characterized in that** the table is dynamically updated.

13. A method according to any one of claims 10-12, **characterized in that** a group of NAP's is defined, comprising a number of NAP's neighbouring said current NAP which is in contact with the terminal immediately before initiation of handing over of the data communication to another NAP, and that said subgroup is selected from said group of NAP's.

14. A method according to claim 13, **characterized in that** said subgroup comprising NAP's is positioned exclusively on one side or exclusively on the other side of the current NAP.

15. A method according to any one of the preceding claims, **characterized in that** the method comprises signalling of Bluetooth signals

## Patentansprüche

1. Verfahren zum automatischen Nachführen (Weiterreichen) eines Terminals, insbesondere eines Zugangsnetz-Nutzers (Access-Network-User; ANU) von einem Hochgeschwindigkeits-Netzknoten (Network-Access-Point; NAP) zu einem anderen Hochgeschwindigkeits-Netzknoten (NAP), wobei diese Hochgeschwindigkeits-Netzknoten (NAP) ein Teil eines Zugangsnetzes (Access Network) sind, und wobei mit der Absicht, eine Daten-Kommunikation fortzuführen, eine Anzahl von Hochgeschwindigkeits-Netzknoten (NAP) initiiert wird, das automatisch nachzuführende Terminal auszurufen,
**dadurch gekennzeichnet, dass**
eine Untergruppe der Hochgeschwindigkeits-Netzknoten (NAP) identifiziert wird, und dass die Hochgeschwindigkeits-Netzknoten (NAP), die nicht zu der Untergruppe gehören, von dem Ausrufen (Paging) des Terminals ausgeschlossen sind, wobei die Identifikation auf einer weiteren Kommunikation basiert, die exklusiv zwischen dem Terminal und dem gegenwärtigen Hochgeschwindigkeits-Netzknoten besteht, der unmittelbar vor dem Initiieren der automatischen Nachführung der Daten-Kommunikation zu einem anderen Hochgeschwindigkeits-Netzknoten in Kontakt mit dem Terminal steht, wobei die weitere Kommunikation zwischen dem Terminal und dem gegenwärtigen Hochgeschwindigkeits-Netzknoten ein grobes Feststellen der Position des Terminals relativ zu dem gegenwärtigen Hochgeschwindigkeits-Netzknoten aufweist.

2. Verfahren nach Anspruch 1, **dadurch gekennzeichnet, dass** die weitere Kommunikation zwischen dem Terminal und dem gegenwärtigen Hochgeschwindigkeits-Netzknoten ein grobes Feststellen der Bewegungsrichtung des Terminals relativ zu dem gegenwärtigen Hochgeschwindigkeits-Netzknoten aufweist.

3. Verfahren nach Anspruch 1 oder 2, **dadurch gekennzeichnet, dass** die Untergruppe ebenso Hochgeschwindigkeits-Netzknoten aufweist, die in einem Bereich positioniert sind, in welchem das grobe Feststellen durch eine Unzuverlässigkeit beeinträchtigt wird.

4. Verfahren nach einem der Ansprüche 1 bis 3, **dadurch gekennzeichnet, dass** die Untergruppe exklusiv Hochgeschwindigkeits-Netzknoten aufweist, die in einem Bereich positioniert sind, in welchem das grobe Feststellen durch eine relative große Unzuverlässigkeit beeinträchtigt wird.

5. Verfahren nach Anspruch 1 oder 2, **dadurch gekennzeichnet, dass** die weitere Kommunikation eine Messung der bei dem gegenwärtigen Hochgeschwindigkeits-Netzknoten gemessenen Signal-Phasendifferenz aufweist.

6. Verfahren nach Anspruch 1 oder 2, **dadurch gekennzeichnet, dass** die Identifikation auf der Basis eines spezifischen Antennen-Strahlungsmusters des gegenwärtigen Hochgeschwindigkeits-Netzknotens festgestellt wird.

7. Verfahren nach Anspruch 5 oder 6, **dadurch gekennzeichnet, dass** beim gegenwärtigen Hochgeschwindigkeits-Netzknoten zwei Antennen verwendet werden, wobei jede Antenne einen 180°-Winkel abstrahlt, und dass eine Untergruppe dahingehend identifiziert wird, dass sie solche Hochgeschwindigkeits-Netzknotens aufweist, die alle entweder bei der einen oder der anderen Seite der Grenze zwischen zwei winkelförmigen Bereichen positioniert sind.

8. Verfahren nach Anspruch 7, **dadurch gekennzeichnet, dass** die Untergruppe dahingehend identifiziert wird, dass sie solche Hochgeschwindigkeits-Netzknotens aufweist, die alle in winkelförmigen Bereichen positioniert sind, die zwei winkelförmige Bereiche trennen, wenn die weitere Kommunikation durch eine Unzuverlässigkeit mehr als ein festgelegter Pegel beeinträchtigt wird.

9. Verfahren nach Anspruch 5 oder 6, **dadurch gekennzeichnet, dass** eine endgültige Untergruppe auf der Basis der Feststellung der zwei oder mehreren Untergruppen definiert wird.

10. Verfahren nach einem der Ansprüche 1 bis 9, **dadurch gekennzeichnet, dass** jeder Hochgeschwindigkeits-Netzknoten (NAP) eine Anzahl zugehöriger Nachbar-Hochgeschwindigkeits-Netzknoten hat, und dass die Nachbar-Hochgeschwindigkeits-Netzknoten in einer Tabelle in einem Zugangsnetz-Server definiert sind.

11. Verfahren nach Anspruch 10, **dadurch gekennzeichnet, dass** die Tabelle Information hinsichtlich den räumlichen Positionen der Hochgeschwindigkeits-Netzknoten (NAP) enthält.

12. Verfahren nach Anspruch 11, **dadurch gekennzeichnet, dass** die Tabelle dynamisch aktualisiert wird.

13. Verfahren nach einem der Ansprüche 10 bis 12, **dadurch gekennzeichnet, dass** eine Gruppe von Hochgeschwindigkeits-Netzknoten (NAP) definiert wird, die eine Anzahl von Hochgeschwindigkeits-Netzknoten (NAP) aufweist, welche den gegenwärtigen Hochgeschwindigkeits-Netzknoten benachbarn, der unmittelbar vor dem Initiieren des automatischen Nachführens der Daten-Kommunikation zu einem anderen Hochgeschwindigkeits-Netzknoten (NAP) in Kontakt mit dem Terminal steht, und dass die Untergruppe von der Gruppe der Hochgeschwindigkeits-Netzknoten ausgewählt wird.

14. Verfahren nach Anspruch 13, **dadurch gekennzeichnet, dass** die Untergruppe, die Hochgeschwindigkeits-Netzknoten aufweist, exklusiv an einer Seite oder exklusiv an der anderen Seite des gegenwärtigen Hochgeschwindigkeits-Netzknoten positioniert ist.

15. Verfahren nach einem der vorhergehenden Ansprüche, **dadurch gekennzeichnet, dass** das Verfahren das Signalisieren von Bluetooth-Signalen aufweist.

## Revendications

1. Procédé de transfert d'un terminal, de préférence un utilisateur de réseau d'accès (ANU pour "Access Network User"), d'un point d'accès au réseau (NAP pour "Network Access Point") vers un autre point d'accès au réseau, lesdits points d'accès au réseau faisant partie d'un réseau d'accès, dans lequel un certain nombre de points d'accès au réseau sont invités à rechercher ledit terminal devant être transféré, dans le but de poursuivre une communication de données, **caractérisé en ce qu'**un sous-groupe desdits points d'accès au réseau est identifié et que les points d'accès au réseau qui n'appartiennent pas audit sous-groupe sont exclus de la recherche dudit terminal, dans lequel ladite identification est fondée sur une nouvelle communication exclusivement entre ledit terminal et le point d'accès au réseau courant, qui est en contact avec le terminal immédiatement avant le lancement du transfert de la communication de données à un autre point d'accès au réseau, ladite nouvelle communication supplémentaire entre le terminal et le point d'accès au réseau courant comprenant une détermination grossière de la position du terminal par rapport au point d'accès au réseau courant.

2. Procédé selon la revendication 1, **caractérisé en ce que** la nouvelle communication entre le terminal et le point d'accès au réseau courant comprend une détermination grossière de la direction de déplacement du terminal par rapport au point d'accès au réseau courant.

3. Procédé selon la revendication 1 ou 2, **caractérisé en ce que** ledit sous-groupe comprend également des points d'accès au réseau qui sont placés dans une zone dans laquelle la détermination grossière est entachée d'un manque de fiabilité.

4. Procédé selon les revendications 1 à 3, **caractérisé en ce que** ledit sous-groupe comprend exclusivement des points d'accès au réseau qui sont placés dans une zone où la détermination grossière est entachée d'un manque de fiabilité relativement élevé.

5. Procédé selon les revendications 1 et 2, **caractérisé en ce que** la nouvelle communication comprend une mesure de la différence de phase de signal, effectuée au niveau du point d'accès au réseau courant.

6. Procédé selon les revendications 1 et 2, **caractérisé en ce que** ladite identification est déterminée sur la base d'un diagramme de rayonnement d'antenne spécifique du point d'accès au réseau courant.

7. Procédé selon la revendication 5 ou 6, **caractérisé en ce que** deux antennes sont utilisées au point d'accès au réseau courant, chaque antenne rayonnant sur un angle de 180 °, et **en ce qu'**un sous-groupe est identifié de manière à comprendre les points d'accès au réseau qui sont tous placés d'un côté ou de l'autre de la ligne de délimitation entre les deux plages angulaires.

8. Procédé selon la revendication 7, **caractérisé en ce que** ledit sous-groupe est identifié de manière à comprendre les points d'accès au réseau qui sont tous placés dans des plages angulaires qui séparent lesdites deux plages angulaires lorsque ladite nouvelle communication est entachée d'un manque de fiabilité supérieur à un niveau prédéterminé.

9. Procédé selon la revendication 5 ou 6, **caractérisé en ce qu'**un sous-groupe final est défini sur la base de la détermination de deux ou plus de deux sous-groupes.

10. Procédé selon les revendications 1 à 9, **caractérisé en ce que** chaque point d'accès au réseau a un nombre de points d'accès au réseau voisins qui lui sont associés et **en ce que** les points d'accès au réseau voisins sont définis dans une table d'un serveur du réseau d'accès.

11. Procédé selon la revendication 10, **caractérisé en ce que** la table contient des informations sur les positions des points d'accès au réseau dans l'espace.

12. Procédé selon la revendication 11, **caractérisé en ce que** la table est mise à jour dynamiquement.

13. Procédé selon l'une quelconque des revendications 10 à 12, **caractérisé en ce qu'**un groupe de points d'accès au réseau est défini, comprenant un certain nombre de points d'accès au réseau voisins dudit point d'accès au réseau courant qui est en contact avec le terminal immédiatement avant le lancement du transfert de la communication de données vers un autre point d'accès au réseau, et **en ce que** ledit sous-groupe est sélectionné dans ledit groupe de points d'accès au réseau.

14. Procédé selon la revendication 13, **caractérisé en ce que** ledit sous-groupe contenant des points d'accès au réseau est placé exclusivement d'un côté ou d'un autre du point d'accès au réseau courant.

15. Procédé selon l'une quelconque des revendications précédentes, **caractérisé en ce que** le procédé comprend une signalisation au moyen de signaux Bluetooth.
